# EUROPEAN PATENT APPLICATION

(11) **EP 1 601 139 A1**
(43) Date of publication of application: **30.11.2005**
(21) Application number: 04012623.7
(22) Date of filing: 27.05.2004
(51) Int. Cl.: H04L 12/56, H04L 12/46

(54) **Method and apparatus for routing traffic through a communications network**

(71) Applicant: SIEMENS AKTIENGESELLSCHAFT, 80333 München (DE)
(72) Inventor: Edwin, Richard, SO15 4HU Southampton (GB); Fan, Changpeng, Dr., 10557 Berlin (DE); Reeve, Andrew, SO22 5AH Winchester Hants (GB)

(57) **Abstract**

Method and apparatus for providing flexibility in the way that a network using MPLS can adapt to changeable traffic patterns; efficiently set up new paths without disrupting existing traffic and overcome link failures. This is achieved by the creation of bypass tunnels that divert traffic around points of failure, divert low priority traffic from a link that is required by high priority traffic, and divert traffic when the current placement of paths within the network is inefficient.

## Description

### Field of the invention

The invention is used in mobile or fixed networks that use tunnels in order to perform fast rerouting of data traffic when it is necessary to reoptimise the network.

### Summary of the invention

Increasingly, communications networks employ Multiprotocol Label Switching (MPLS) Traffic Engineering tunnels to transport packet data traffic in order to perform load balancing and route around congestion points and thus improve network efficiency and deliver high levels of Quality of Service (QoS). MPLS is a general technique for the fast transport of IP packets, or other protocol data units, using labels assigned to the packets. Due to the fact that a variety of services with different QoS requirements can be supported in today's networks, Differentiated Services (DiffServ) aware Traffic Engineering are employed. Differentiated Services are composed of a number of functional elements implemented in network nodes, including a small set of per-hop forwarding behaviors, packet classification functions, and traffic conditioning functions including metering, marking, shaping, and policing.
Separate tunnels for each class of service are set up, an aggregate of traffic requiring the same QoS treatment. Tunnels are set up between source and destination nodes in the communications network and an appropriate bandwidth must be reserved for each. The bandwidth depends on the traffic volume between particular source / destination nodes. Tunnels are also prioritised in respect to their use of network resources. For example real-time services may be given priority to ensure they are placed on shortest routes between source / destination nodes. However, in modern communications networks traffic patterns are subject to considerable variation, especially when mobile populations are involved, due to the fact of their mobility, as members of such populations connect, disconnect, and roam. As tunnels are set up and torn down, their placement can become inefficient and when a new traffic demand is requested, there may be a requirement to set up a new tunnel, but this will be barred by the placement of the currently existing tunnels; also a high priority traffic request may pre-empt a lower priority one in order to gain access to resources, this will lead to the lower priority traffic being removed as described in European Patent Application EP1289208, causing major disruption to the low priority traffic due to the fact that the tunnel resources are now allocated to the high priority traffic. Additionally, if a link fails along a path, traffic is disrupted and can be lost until it can be rerouted. Perturbations, also cause an increase in network signalling between nodes, as the nodes become aware of perturbations signal them to each other and then try to reroute the affected traffic.

Currently, no solution exists that can solve the above issues. There exists therefore a need for a solution that can provide flexibility and speed in the way that a communications network can adapt to a reoptimisation when this is necessary due to changeable traffic patterns, and efficiently protect existing network traffic from perturbations before such perturbations occur and cause problems in the network, as well as keeping the network signalling to a minimum.

With the present invention the above mentioned problems are resolved. Flexibility and speed of adaptation to changeable traffic patterns and efficient protection of network traffic are achieved by the teachings contained in the independent method and system claims.

Said independent method routes packet data traffic in a communications network comprising the steps of:
- setting up a set of tunnels through the communications network (500) between a source node (A) and a destination node(C) to transport packet data traffic;
- transporting said packet data traffic through said set of tunnels in said communications network (500);
- detecting a perturbation (p);
- in response to detecting said perturbation (p) switching said packet data traffic onto a bypass tunnel (bt) avoiding said perturbation (p).

Said system has means adapted to route packet data traffic in a communications network whereby said system comprises of:
- setting means (170) adapted to set up a set of tunnels through said communications network (500) between a source node (A) and a destination node (C);
- transportation means (160) adapted to transport said packet data traffic through said set of tunnels in said communications network (500);
- detection means (110) adapted to detect a perturbation (p);
- switching means (120 adapted to switch said packet data traffic onto a bypass tunnel (bt) in response to said detection means (110) having detected a perturbation (p).

Thus by treating the different types of perturbation that can occur in a network in the same way and by creating bypass tunnels through the network, the issues mentioned above are resolved, as the created bypass tunnels allow for the transportation of the packet data traffic through the network avoiding points of perturbation. Tunnel placement becomes more efficient within the network, network configuration is improved, lower priority traffic does not have to suffer any disruptions due to pre-emption while still allowing high priority traffic with QoS requirements to be accommodated, and link failures can be overcome very quickly reducing traffic disruption especially for real-time services in a mobile environment, loss of traffic and also reducing network signalling and management overhead. In the context of the application the term "perturbation", is meant to mean any instance where the normal flow of traffic through a tunnel is affected. This can be caused by congestion, link failure, setup failure, pre-emption occurring at a point in time or when the conditions are such that such an instance can occur.

The above advantages provided by the invention, provide great benefits in a mobile environment, where due to the continuous changes that occur in such an environment such as mobile users connecting, disconnecting, roaming, real time and non-real time data with different priorities being transmitted, link failures, inefficiently located tunnels or high priority calls needing resources pre-empting low priority calls, can seriously affect the QoS provided by the network and cause an increase in network signalling.

Further advantages can be seen in the dependent claims, whereby in order to transparently route the traffic MPLS stacking is used. An MPLS label is assigned to each data packet to allow packets to avoid the traffic perturbation until they can rejoin the original tunnel. In this way, packets are not made aware that a change of tunnel has occurred. Once the packets have rejoined the original tunnel, the label is removed, and so they do not have to transport any extra payload to their destination, as the MPLS label is only used locally at the point of traffic perturbation. Additionally, a message is sent to the traffic source node, by the node that performs the traffic switching, notifying it of the establishment of a bypass tunnel, thus allowing the source node to modify the labels it assigns to the packets it transmits to reflect the new tunnel path. In this way, perturbation of the traffic is avoided and QoS is maintained.

It must be noted at this point that all nodes in the network, monitor the network at all times for traffic situations that can cause traffic problems. Additionally they can also detect when traffic problems have occurred.

### Short description of the drawings

The present invention may be understood more readily, and various other aspects and features of the invention may become apparent from consideration of the following description and accompanying figures which are given by way of illustration only, and thus are not limitative of the present invention, and wherein:
Fig. 1 shows, how different classes of traffic are put onto separate tunnels and transported through a network.
Fig. 2 shows, how the invention works in the case of pre-emption.
Fig. 3 shows, how the invention works in the case of an inefficient tunnel placement.
Fig. 4a, 4b show, how the invention works in the case of a link failure.
Fig. 5 shows, how the invention works in the case of using a central management entity.
Fig. 6a, 6b show, the layout of the management entity and of a network device.
Fig. 7 shows, a bypass tunnel failure.
Fig.8 shows, a bypass tunnel failure.

### Detailed description of the invention

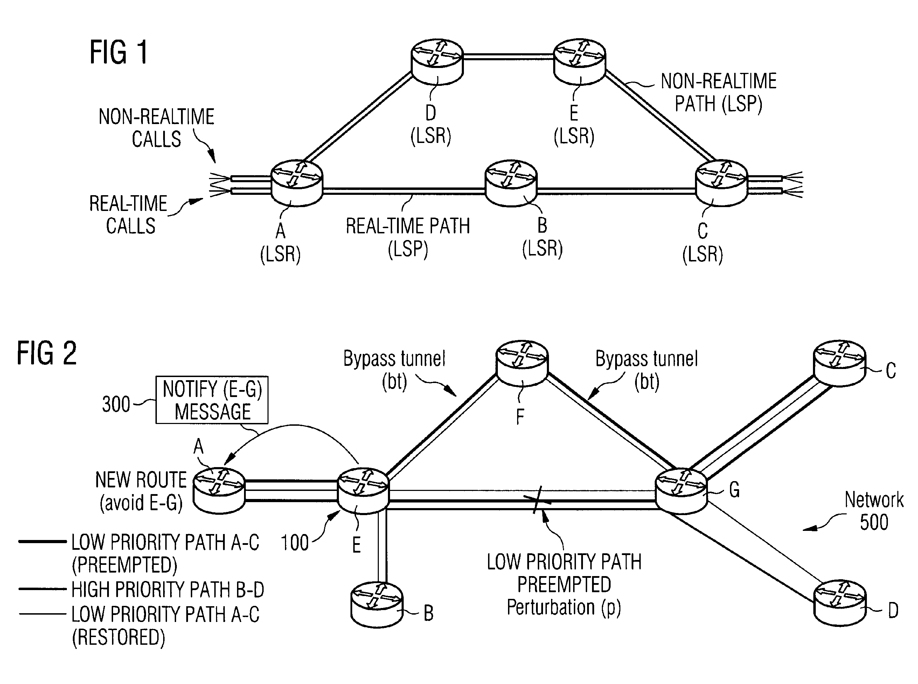

As can be seen in fig. 1, different classes of packet data traffic are placed on different sets of tunnels. In the example shown, packet data traffic is divided in real and non-real time calls. Real time calls are transported between nodes A and C over the short real time tunnel (high priority) A-B-C which takes into account delay constraints. Non-real time calls are transported between nodes A and C over the long non-real time tunnel (low priority) A-D-E-C. The bandwidth of each tunnel depends on the traffic volume that is transported through it.

The data is transported through the network by use of Multiprotocol Label Switching (MPLS), as described in RFC 3031, "Multiprotocol Label Switching Architecture", E. Rosen et al., January 2001. The data transported is assigned labels, and is transported on so called label switched paths (LSPs), which are made up of sets of tunnels. Nodes in the network, known as Label Switching Routers (LSRs), as opposed to normal IP routers, do not use the destination IP address in order to determine the outgoing interface, but use the assigned label. Without limiting the application, the terms "node", "network node", "network device" are used in the embodiments described in the application, to indicate a network node that has the functionality of a Label Switching Router (LSR).
The analysis of tunnel placement and the calculation of tunnel configuration is performed either by a centralised network management entity that manages the whole network or by edge nodes based on their acquired knowledge of the current state of the network.

In Fig. 2, an illustrative embodiment of the invention where MPLS stacking is used, is shown. As it can be seen an LSP currently exists between nodes A and C in communications network (500), which runs through LSR nodes A-E-G-C, and consists of the tunnel A-E-G-C. The traffic that is being transported along this path is of a low priority. At a later point in time a new LSP is required to be set up between nodes B and D. The route selected runs through LSR nodes B-EG-D consisting of the tunnel B-E-G-D and is signalled through the network by sending a Resource Reservation Protocol (RSVP) Path message along the selected route that requests the necessary resources to be reserved by each node along the path. When the LSP can be accommodated by all LSRs, a Reserve (RESV) message is sent in the reverse direction, reserving the resources at each point and completing the set up process. The traffic to be transported in this new request has a higher priority than the existing traffic being transported. Detection means at LSR node E, detect that there are insufficient resources e.g. bandwidth for both LSPs to be accommodated along the path E-G that is located between LSR nodes E and G as the two different tunnels share this common route segment, and that therefore a traffic perturbation will therefore occur. In this case the traffic perturbation consists of two LSPs with differing traffic priorities needing resources along a common segment. Node E therefore will pre-empt the lower priority LSP to release sufficient bandwidth in order for the higher LSP path to be set up. Node E sends an RSVP Notify message (300) to node A, which is the source of the low priority traffic, indicating that a change has occurred. Having received the RSVP Notify message (300), node A, will then calculate a new route for its LSP by applying a constraint to the routing algorithm that avoids the link E-G. This is done by creating a bypass tunnel from node E to node G via node F. Thus the new LSP will be A-E-F-G-C consisting of the tunnel A-E-F-G-C. Link E-G with its corresponding tunnel is bypassed and the lower priority traffic continues being transmitted. At the point (E)/(100) where the traffic is moved from the pre-empted tunnel onto the bypass one, an MPLS label is assigned (pushed) to each data packet by node E, to allow transparent routing around the bypass without any disruption to the rerouted traffic. As it can be seen, in this way low priority traffic that is pre-empted in the network is protected from being deleted.
At a later stage tunnels can be further modified in order to follow new optimal routes and the bypasses removed if necessary.
It must also be noted that pre-emption can occur also in the case when an existing LSP attempts to increase its resources e.g. bandwidth.
In this embodiment, the bypass tunnel is created locally at the point (E)/(100) where the pre-emption occurs as the node has knowledge of the current state of the network, however alternatively this could be planned centrally through use of a centralised network management entity.

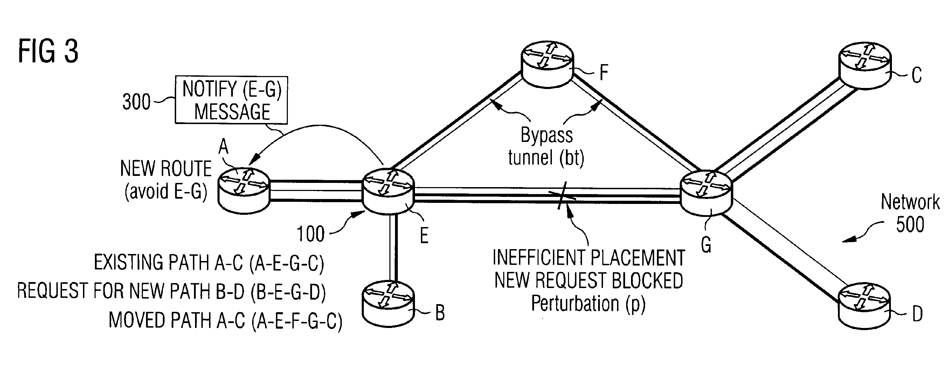

In fig. 3, an alternative embodiment where again MPLS stacking is used, shows a communications network (500) where a tunnel already exists between nodes A-E-G-C. When a new traffic demand is made from node B to D via the path B-E-G-D, the current existing tunnel will bar the new request as along link E-G there is an already existing tunnel, and there is not enough bandwidth available in the existing tunnel to accommodate the new request. Node E detects this traffic perturbation, by the use of monitoring means. In this case the traffic perturbation consists of two LSPs causing congestion along a common segment. In this case as the existing tunnel is inefficiently located in the network due to the fact that it bars the new request, a new improved network configuration which allows the existence of the new tunnel is calculated, before the congestion can cause problems in the network. This calculation will involve rerouting some or parts of existing tunnels. The new revised network configuration is optimised, by maximising the commonality of the new tunnel routes from their old ones. The set of tunnels which are to be rerouted is analysed to identify commonality between the route perturbations. Bypass tunnels are set up for those sections. The affected old tunnels are switched onto the bypass tunnels and the new tunnel is admitted. In fig. 3 this will consist of a bypass tunnel being set up between nodes E and G via node F, setting up a new path A-E-F-G-C, thus allowing a path to be set up from B to D, using a tunnel running along path B-E-G-D. At the point (E)/(100) where data packets from perturbed tunnels are moved onto the bypass, an MPLS label is assigned (pushed) to each data packet. This is done in order for packets arriving at node B and have no way of knowing of the change of path to have the necessary information for the nodes to transport the packets through the bypass tunnel with no disruption.
In this embodiment, the bypass tunnel is created locally at the point where the detection of the traffic congestion occurs as the node has knowledge of the current state of the network, however alternatively this could be planned centrally through use of a centralised network management entity.

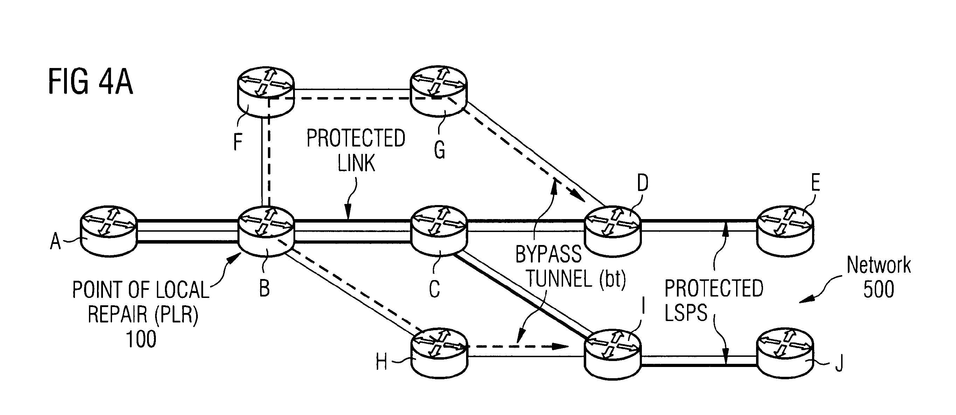

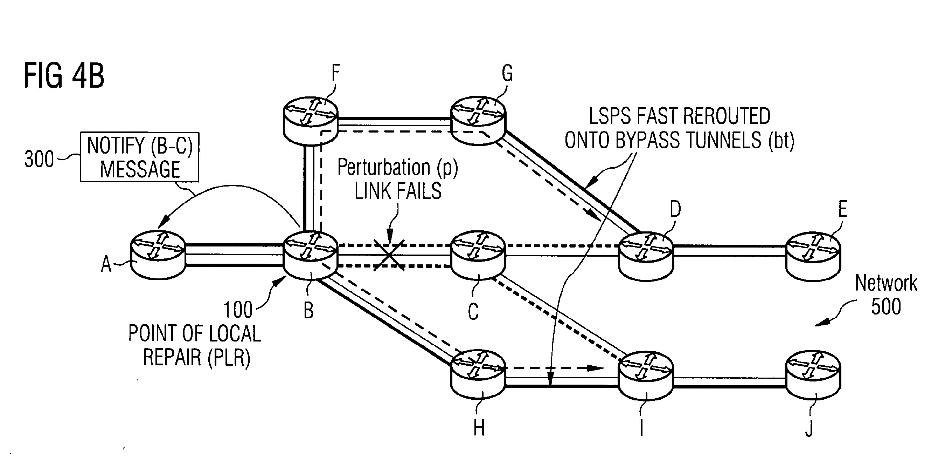

In a further embodiment shown in fig. 4a and 4b, the advantages of creating bypass tunnels using MPLS stacking in networks are shown when a fault occurs on a network path. In this case, bypass tunnels are created in order to perform local repair of LSPs at the nodes closest to a point of failure (node or link). This allows service restoration in 10s of milliseconds, matching the performance of Synchronous Optical Network / Synchronous Digital Hierarchy (SONET/SDH) self healing rings and adequate for services with strict constraints such as voice. When a failure occurs, traffic is rerouted around the failure, and rejoins its original path as soon as efficiently possible. This is achieved by calculating and configuring bypass tunnels in advance, at the same time when setting up LSPs, and having them in stand-by. Occurrence of a fault is detected by using rapid low level hardware mechanisms which immediately divert the affected traffic onto the pre-established bypasses. The node that detects a failure, places traffic onto a bypass, and is known as the point of local repair (PLR). At the point where the traffic is moved onto the bypass an MPLS label is assigned (pushed) to each data packet so that there is no disruption to the rerouted traffic.
In this embodiment as in the previously discussed ones MPLS stacking is used. When a bypass tunnel rejoins the original path, the MPLS labels that were assigned onto the data packets are removed (popped), so that the packets have the same label that was originally assigned by the source node and that the extra payload is removed. Once local repair has been effected, the affected LSPs can be re-optimised at a later stage.
As can be seen in fig. 4a and 4b, the network has two protected LSPs from node A to node E and from node A to node J. When setting up the path, the LSPs created are: A-B-C-D-E for the first one and A-B-C-I-J for the second one. Each resource used is protected, but for reasons of simplicity and clarity we consider only the link B-C as being protected. Node B, acts as the point of local repair (PLR)/(100) for the link B-C, and is responsible for creating the bypass tunnels, when the paths are set up. Node B, will calculate the shortest path to any node past link B-C, that rejoins the LSP path created. In normal practise, the routing algorithm that performs this calculation is provided with a single destination, however in the case of the invention the routing algorithm is provided with a destination set of nodes (D, E, I, F, H, G, J). Upon finding a node that rejoins the LSP path using the shortest path, will terminate the calculation. For the first LSP, it creates the bypass tunnel B-F-G-D, which rejoins the original path at node D, and for the second LSP, it creates the bypass tunnel B-H-I, which rejoins the original path at node I. An alternative approach to perform the calculation would be to choose the shortest path from node B to nodes E and J excluding link B-C, however this is likely to consume more protection pool bandwidth and so is not used.
If link B-C now fails, node B (PLR)/(100), being the point of local repair will detect the link failure, it will then switch the data packets that belong to the protected LSPs onto their corresponding bypass tunnels. At node B (PLR)/(100) when the traffic is moved onto the bypass an MPLS label is assigned (pushed) to each data packet so that there is no disruption to the rerouted traffic. This is done in order for packets arriving at node B and have no way of knowing of the change of path to have the necessary information for the nodes to transport the packets through the bypass tunnel. Thus, LSP A-E data packets will now follow the path A-B-F-G-D-E, rejoining the original path at D, and LSP A-J data packets will now follow the path A-B-H-I-J, rejoining the path at I. A failure notify message (300) will be sent from node B to node A, which can then modify the LSPs to take optimal routes to E and J respectively, avoiding the failed link. In this embodiment, the bypass tunnels are created locally at the point (PLR)/(100) where the protected links start and where the detection of the traffic perturbation occurs as the node has knowledge of the current state of the network, however alternatively this could be planned centrally through use of a centralised network management entity.

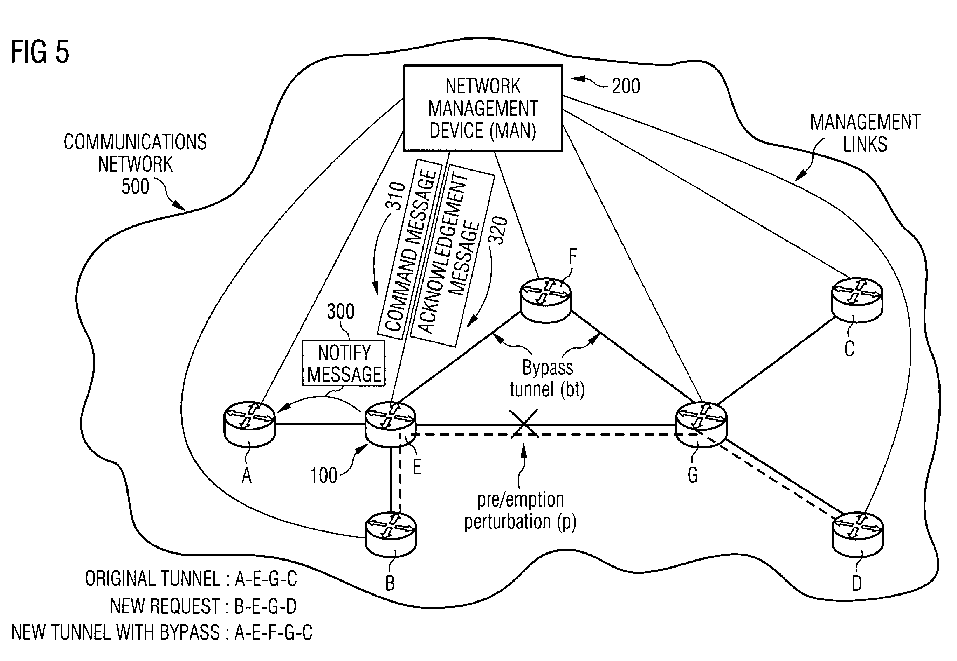

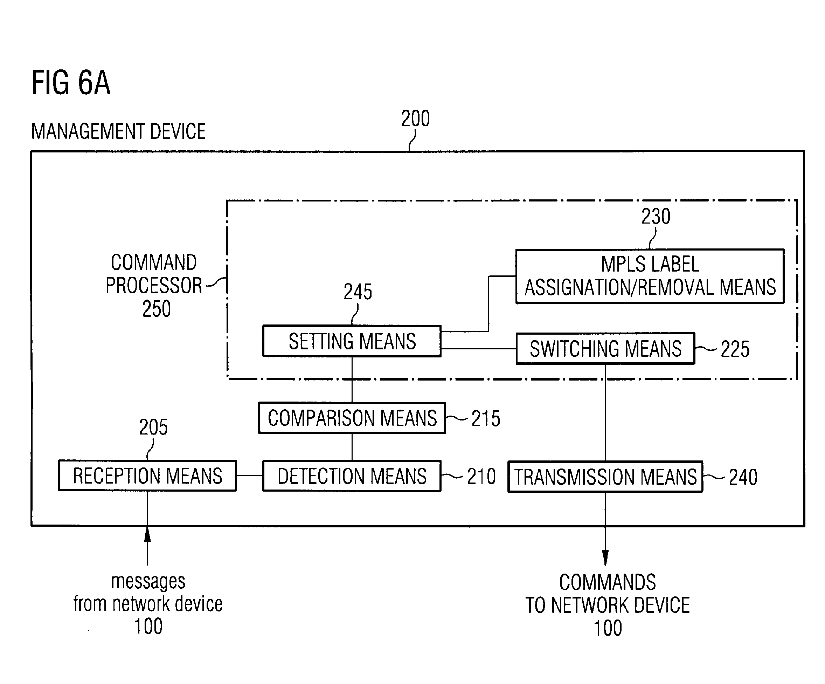

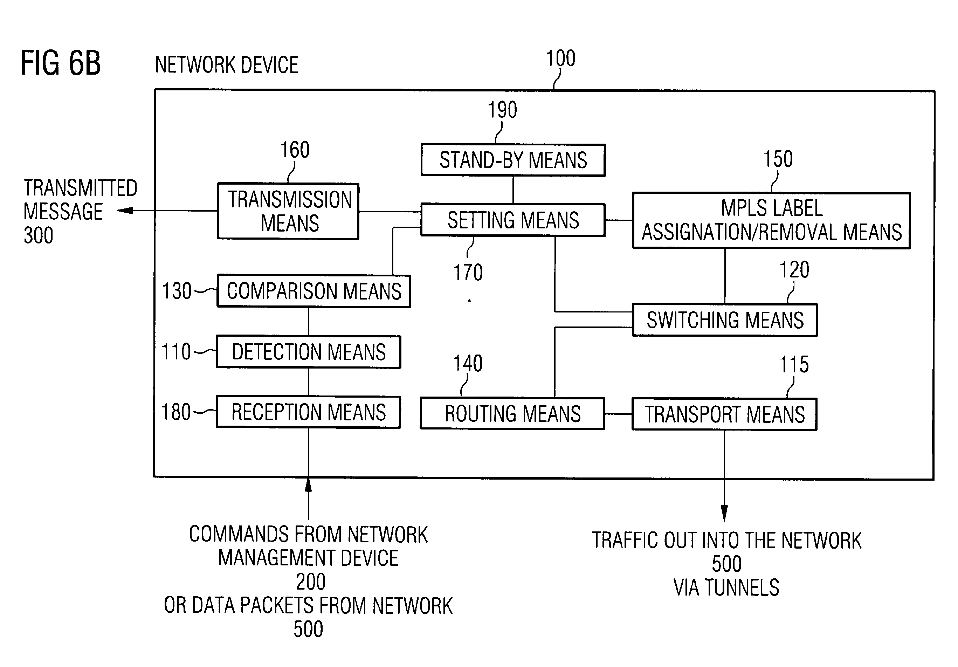

Referring now to the case of using a centralised network management entity, an illustrative embodiment is shown in fig. 5, where MPLS stacking is used. For reasons of simplicity the embodiment will also be explained with regards to the case of pre-emption.
As it can be seen the communications network (500) comprises of LSR nodes A, B, C, D, E, F, G and a centralised management entity (MAN)/(200), which is connected to each node. The centralised management entity manages, monitors and oversees the network and can be a dedicated management workstation /PC or a specially manufactured network management device. It comprises, as shown in fig. 6a, of reception means (205), detection means (210), comparison means (215), routing means (220), switching means (225), MPLS assignation and removal means (230), transmission means (240), setting means (245) which are responsive to signals transmitted by the nodes in the network. In the embodiment, an LSP currently exists between nodes A and C that runs through LSR nodes A-E-G-C, and consists of the set of tunnels A-E-G-C. The traffic that is being transported along this path is of a low priority. At a later point in time a new LSP is required to be set up between nodes B and D along the route through LSR nodes B-EG-D consisting of the set of tunnels B-E-G-D. Node B has signalling means that signal a Resource Reservation Protocol (RSVP) Path message along the selected route that requests the necessary resources to be reserved by each node along the path. When the LSP can be accommodated by all LSRs, a Reserve (RESV) message is sent in the reverse direction, reserving the resources at each point and completing the set up process. The traffic to be transported in this new request has a higher priority than the existing traffic being transported. Detection means (110) at LSR node E, as shown in fig. 6b, detect that a request for reservation has been received and will notify the central management entity of the request. The central management entity has means (210) adapted to detect that such a notification has been received and comparison means (215) to compare the priority requirements of the new request to those of the currently transported traffic. Once the comparison means (215) indicate that the new request has a higher priority and that a perturbation will occur, the central management entity will initiate through its command processor (240) a procedure for re-routing and bypass tunnel creation. It will transmit a command (310), generated by the transmission means (240) instructing node E, to pre-empt the lower priority LSP in order to accommodate the new request. On receiving the command node E will send an acknowledgement message (320) back to the management entity. On reception of the acknowledgement, the management entity will transmit a command (310) instructing node E to send an RSVP Notify message (300) to node A, which is the source of the low priority traffic, indicating that a change has occurred in the traffic path. The management entity having an up to date image of the network, will send a command to node E, instructing it to create a bypass tunnel, the command being generated by the setting means (245) from node E to node G via node F and a command instructing node E to switch the low priority traffic onto the bypass tunnel, generated by the switching means (225). Having received the RSVP Notify message, node A, will then calculate a new route for its LSP by applying a constraint to the routing algorithm, which is performed by the routing means (140) that avoids the link EG. Thus the new LSP will be A-E-F-G-C consisting of the set of tunnels A-E-F-G-C. Link E-G with its corresponding tunnel now used by the new request, is bypassed and the lower priority traffic continues being transmitted. The management entity also sends a command (310) instructing node E to assign an MPLS label to each data packet that is to be switched from the pre-empted path onto the bypass, so that the nodes transparently route the traffic without any disruption occurring. Additionally the management entity will send a command instructing the node, where the bypass tunnel rejoins the original path, in our case node G, to remove the MPLS label that was assigned at node E, from the packets, so that the packets have the same label that was originally assigned by the source node and that the extra payload is removed.
It must also be noted that pre-emption can occur also in the case when an existing LSP attempts to increase its resources e.g. bandwidth.

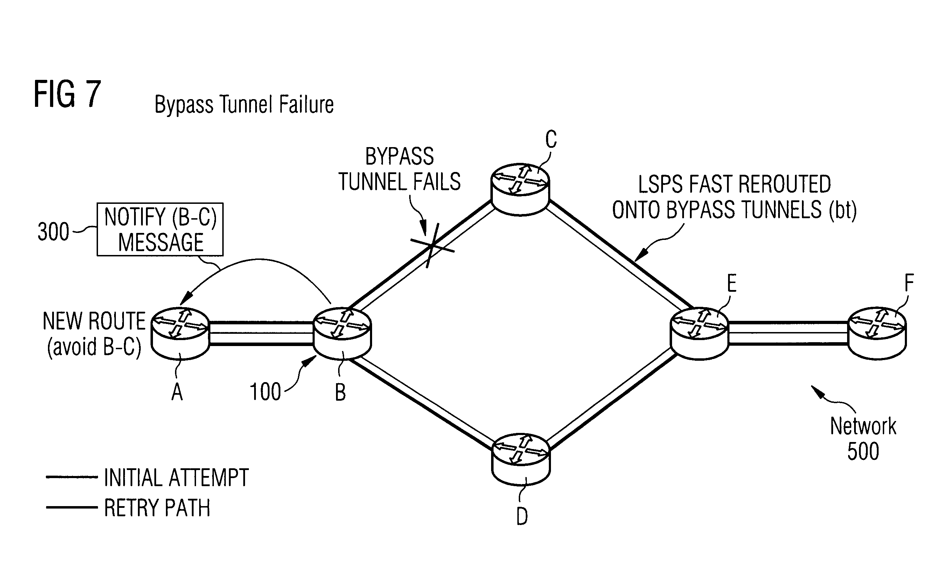

In the event now of a failure in the creation of the bypass tunnel, as can be seen in Fig. 7, where source node A had originally selected the route A-B-C-E-F for the LSP A-F. However, node B (100), the point of local repair for the link B-C , is unable to create a bypass tunnel in order to protect link B-C. Therefore as a bypass providing protection is not possible, the link will be unprotected. In this case node B (100) will send a Notify message (300) to node A, that indicates that a bypass tunnel could not be created for the protected link B-C. Node A will then calculate an alternate route with a constraint that specifies that the link B-C must be avoided. Therefore, it will select route A-B-D-E-F for the LSP A-F.

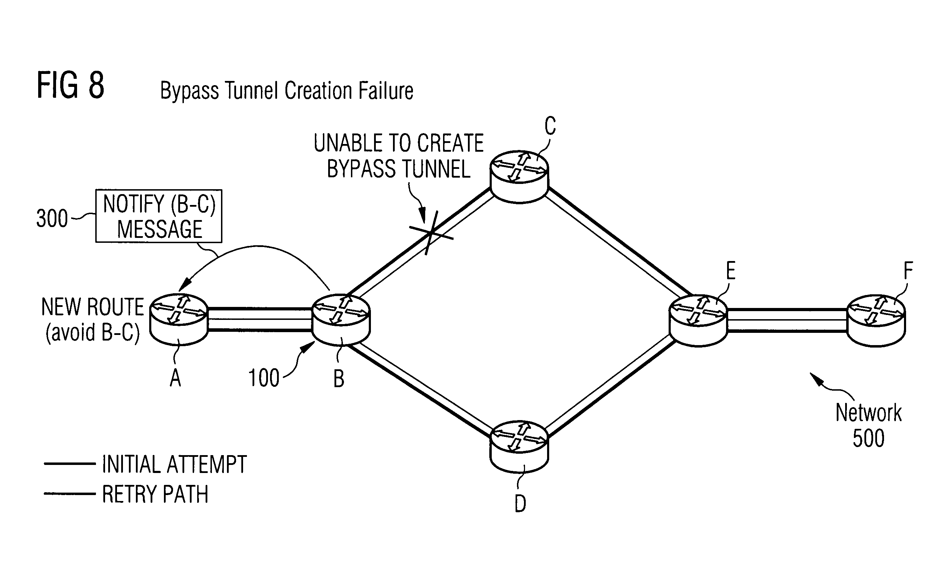

In the event now that a bypass tunnel failure due to the failure of a network facility i.e. node or link it uses, as seen in Fig. 8, the point of local repair (100) will try to create a new tunnel. Due to the fact that a node or a link has failed, this might be not possible. Therefore the protected link will be unprotected. In this case the link needs to be reconnected along alternate paths which can provide full protection. In this case source node A had originally selected the route A-B-C-E-F for the LSP A-F, with each traversed facility protected by a bypass tunnel. The facility that carries the bypass tunnel that protects link B-C, fails (the link is broken). Node B, therefore will be unable to create a replacement bypass tunnel to maintain protection. Node B (100) will then send a Notify message (300) to node A, that indicates that a bypass tunnel has failed. Node A will then calculate an alternate route with a constraint that specifies that the link B-C must be avoided. Therefore, it will select route A-B-D-E-F for the LSP A-F.

Although the invention has been described in terms of preferred embodiments described herein, those skilled in the art will appreciate other embodiments and modifications which can be made without departing from the scope of the teachings of the invention. All such modifications are intended to be included within the scope of the claims appended hereto.

## Claims

1. Method for routing packet data traffic in a communications network (500) comprising the steps of:
- setting up a set of tunnels through the communications network (500) between a source node (A) and a destination node(C) to transport packet data traffic;
- transporting said packet data traffic through said set of tunnels in said communications network (500);
- detecting a perturbation (p);
- in response to detecting said perturbation (p) switching said packet data traffic onto a bypass tunnel (bt) avoiding said perturbation (p).

2. Method according to claim 1, wherein: the bypass tunnel (bt) is set up in response to detecting said perturbation (p) .

3. Method according to claims 1 or 2, wherein: said perturbation (p) is a perturbation caused by a tunnel located in said communications network (500) blocking the setting up of a new set of tunnels.

4. Method according to claims 1 or 2, wherein: said perturbation (p) is a perturbation caused by a new request for transporting packet data having a packet data priority that is higher than the packet data priority of the packet data being transported through the set tunnels.

5. Method according to claim 1, wherein: the bypass tunnel (bt) is set up at the same time to setting up the set of tunnels through the said communications network (500) and kept in stand-by.

6. Method according to claims 1 or 5, wherein: said perturbation (p) is a perturbation caused by a link failure.

7. Method according to claim 3, further comprising: a step of comparing current tunnel placement with requested tunnel placement upon reception of a request for setting up a new set of tunnels.

8. Method according to claim 7, wherein: upon ascertaining that an existing tunnel blocks the setting up of the new set of tunnels, the packet data traffic being transported is switched from the existing tunnel onto the bypass tunnel (bt).

9. Method according to claim 4, wherein: upon reception of said new request for transporting packet data, a comparison of the priorities of the packet data traffic being transported and of the new packet data traffic request is performed.

10. Method according to claim 9, wherein: upon ascertaining that the new packet data traffic request has a higher priority, the packet data being transported is switched onto the bypass tunnel (bt).

11. Method according to claim 6, wherein: upon ascertaining that a link has failed, the packet data being transported is switched onto the bypass tunnel (bt).

12. Method according to claims 8 or 10 or 11, further comprising the step of assigning at a point (100) of switching packet data traffic onto the bypass tunnel (bt), a Multiprotocol Label Switching (MPLS) label is assigned to at least one packet.

13. Method according to claim 12, wherein: transparent routing is performed based on the MPLS label.

14. Method according to claim 12, further comprising the step of removing the MPLS label at a point (G) when the packet data traffic exits the bypass tunnel.

15. Method according to claims 8 or 10 or 11, further comprising the step of transmitting at the point (100) of switching packet data traffic onto the bypass tunnel (bt), a message (300) to the source node (A) indicating that a bypass tunnel (bt) has been established.

16. A system comprising: means adapted to route packet data traffic in a communications network (500);
- setting means (170)/(245) adapted to set up a set of tunnels through said communications network (500) between a source node (A) and a destination node (C);
- transportation means adapted to transport said packet data traffic through said set of tunnels in said communications network (500);
- detection means (110) (210) adapted to detect a perturbation (p);
- switching means (120)/(225), responsive to the detecting means, adapted to switch said packet data traffic onto a bypass tunnel (bt).

17. A system according to claim 16, further comprising: means adapted to set up the bypass tunnel (bt) in response to said detection means having detected a perturbation (p).

18. A system according to claims 16 or 17, wherein: said detection means (110)/(210) are adapted to detect a tunnel located in the said communications network (500) blocking the setting up of a new set of tunnels.

19. A system according to claims 16 or 17, wherein: said detection means (110)/(210) are adapted to detect packet data traffic priorities of the packet data traffic being transported and of a new packet data traffic request, the system further comprising comparison means (130)/(215) adapted to compare said priorities.

20. A system according to claim 16, comprising: setting means (170)/(245) adapted to set up the bypass tunnel (bt) at the same time to setting up the set of tunnels through the said communications network (500) and means (190) adapted to keep it in stand-by.

21. A system according to claims 16 or 20, wherein: said detection means (110)/(210) are adapted to detect a link failure.

22. A system according to claim 18, comprising:
- comparison means (130)/(215) adapted to compare tunnel location;
- switching means (120))/(225) responsive to said comparison means (130)/(215) indicating that an existing tunnel blocks a new tunnel request, adapted to switch packet data traffic from the existing tunnel onto the bypass tunnel.

23. A system according to claim 19, comprising: means (120)/(225) adapted to switch the packet data traffic being transported onto the bypass tunnel (bt) in response to the comparison means (130)/(215) indicating a higher priority for the new packet data traffic request.

24. A system according to claim 21, comprising: means (120)/(225) adapted to switch the packet data being transported onto the bypass tunnel (bt) upon detection of a link failure.

25. A system according to claims 22 or 23 or 24, comprising: assignation means (150)/(230) adapted to assign a Multiprotocol Label Switching (MPLS) label to at least one packet when the switching means (120)/(225) switch the packet data traffic.

26. A system according to claim 25, comprising: routing means (140) adapted to use the MPLS label for transparent routing.

27. A system according to claim 25, comprising: removal means (150) adapted to remove said MPLS label once the packet data traffic exits the bypass tunnel.

28. A system according to claims 22 or 23 or 24, comprising: transmission means (160)/(240) adapted to transmit a message (300) to the source node (A) indicating that a bypass tunnel (bt) has been established.

29. A network device (100) comprising:
- routing means (140) adapted to route packet data traffic in a communications network (500);
- transportation means (115) adapted to transport said packet data traffic through said set of tunnels in said communications network (500),
**characterised in that** the network device comprises:
- detection means (110) adapted to detect a perturbation (p);
- comparison means (130) adapted to compare traffic priorities and/or tunnel location;
- setting means (170), adapted to set up a set of tunnels through said communications network (500) between a source node (A) and a destination node (C), furthermore said setting means (170) are adapted to set up bypass tunnels (bt) at the same time as setting up the set of tunnels through the said communications network (500) and further comprise stand-by means (190) adapted to keep them in stand-by, and also said setting means (170) are responsive to the said detection means (110) detecting a perturbation (p) and are adapted to set up bypass tunnels (bt), and **in that** the network device further comprises;
- switching means (120), responsive to the said detection means(110) detecting a perturbation (p), adapted to switch said packet data traffic onto a bypass tunnel (bt);
- label assignation means (150) adapted to assign a Multiprotocol Label Switching (MPLS) label to at least one packet of said packet data traffic;
- label removal means (150) adapted to remove said MPLS label from said at least one packet of said packet data traffic;
- transmission means (160) responsive to said setting means (170) setting up a bypass tunnel (bt), adapted to transmit a message (300) to another network device (A).

30. A network management device (200) comprising:
- reception means (210) adapted to receive a message from a network device (100) within a communications network (500);
- detection means (220) adapted to detect a perturbation (p) in said message,
**characterised in that** the network management device comprises:
- comparison means (230) adapted to compare the traffic priority of the packet data traffic being transported to the traffic priority of the new packet data traffic request and/or the tunnel location;
- command processing means (250) adapted to generate commands (310) to set up tunnels and bypass tunnels, said bypass tunnels can be set up concurrently with the setting up of the tunnels and kept in stand-by or set up after detection of a perturbation (p), to switch the data traffic onto the bypass tunnels (bt), to assign MPLS labels to at least one of the data packets and to remove said MPLS labels;
- transmission means (240) adapted to transmit said commands (310) to said network device (100).

31. A network device (100) according to claim 30, comprising:
- reception means (180) adapted to receive commands (310) from a network management device (200);
- transmission means (160) adapted to transmit messages (320) to said network management device (200) and upon reception of a command to transmit a message (300) to another network device (A);
- setting up means (170) responsive to said reception means (180) receiving a command, adapted to set up tunnels and bypass tunnels (bt);
- stand-by means (190) responsive to said setting up means (170) receiving a command to set up bypass tunnels at the same time as setting up the set of tunnels, adapted to keep the bypass tunnels in stand-by;
- switching means (120) responsive to said reception means (180) receiving a command, adapted to switch said packet data traffic onto said bypass tunnels (bt);
- assignation means (150) responsive to said reception means (180) receiving a command, adapted to assign an MPLS label to at least one of the data packets;
- removal means (150) responsive to said reception means (180) receiving a command, adapted to remove said MPLS label;
- routing means (140) responsive to said reception means (180) receiving a command, adapted to route said packet data traffic.
